# FASCICULE DE BREVET EUROPEEN

(11) **EP 0 549 054 B1**
(45) Date de publication et mention de la délivrance du brevet: **30.11.2005**
(21) Numéro de dépôt: 92203952.4
(22) Date de dépôt: 16.12.1992
(51) Int. Cl.: H04B 7/26, H04Q 7/28

(54) **Système de transmission radioélectrique comportant au moins une station centrale et une pluralité de stations satellites**
Funkübertragungssystem mit Zentralstation und einer Anzahl Nebenstationen
Radio-transmission system with central station and a plurality of satellite stations

(30) Priorité: 23.12.1991 FR 9116032
(43) Date de publication de la demande: 30.06.1993
(73) Titulaire: Koninklijke Philips Electronics N.V., 5621 BA Eindhoven (NL)
(72) Inventeur: Makowski, Pierre, Société Civile S.P.I.D., F-75008 Paris (FR)
(74) Mandataire: Chaffraix, Jean

(56) Documents cités:
- WO-A-88/10547
- DE-A- 4 011 648
- GB-A- 1 474 806
- COMMUTATION ET TRANSMISSION. vol. 13, no. 1, 1991, PARIS FR pages 19 - 28 Y. LOUSSOUARN 'DIGICOM 7 Réseau radioélectrique à ressources partagées'

## Description

La présente invention concerne un système de transmission radioélectrique comportant au moins : une pluralité de stations satellites, une station centrale à laquelle une zone de couverture est rattachée, et qui constitue une station centrale de rattachement pour chaque station satellite située dans sa zone de couverture, chaque station centrale émettant des informations vers une station satellite située dans sa zone de couverture par un intervalle de temps alloué d'un multiplex temporel formé sur une voie de transmission descendante, chaque station satellite comportant des premières ressources de transmission qui sont formées par une voie de transmission montante pour un mutiplex temporel, pour permettre, notamment, l'émission d'informations à destination de sa station centrale de rattachement, au moyen d'un intervalle de temps alloué dudit multiplex temporel, système offrant le service d'appel de groupe pour établir un appel de groupe pour un groupe d'au moins une station satellite, demandé à partir d'une station satellite vers sa station centrale de rattachement dite première station de rattachement, à l'aide de ladite première ressource.

Un tel système trouve d'importantes applications lorsque ces systèmes sont utilisés en tant que systèmes privés (par opposition au système public). Dans les systèmes privés, le partage de ressources radioélectriques entre utilisateurs est indispensable pour améliorer l'emploi du spectre radioélectrique alloué et éviter la saturation tout en procurant une gamme de services variée.

Un tel système est décrit, par exemple dans la demande de brevet WO-A-88/10547.

Un de ces services importants est l'appel de groupe qui permet de mettre en communication une pluralité d'interlocuteurs.

Dans ce système connu, cet appel de groupe fait intervenir au moins une station centrale qui met en relation tous les interlocuteurs impliqués par cet appel et placés sous sa couverture. Ceci représente un premier inconvénient ; il y a une mobilisation importante des ressources utilisées par l'appel de groupe, surtout lorsque plusieurs stations centrales sont mobilisées par l'appel de groupe. Un autre inconvénient est que, bien souvent, l'appel de groupe s'adresse aux interlocuteurs du groupe, proches du demandeur de l'appel (par exemple : appel d'une voiture taxi qui veut être dépannée par les autres voitures de la même compagnie proches de la voiture en panne).

La présente invention propose un système du genre mentionné dans le préambule qui évite dans une large mesure cet inconvénient.

Pour cela un tel système est remarquable en ce que lorsque ledit groupe est constitué par au moins une station satellite dite station satellite hors couverture, rattachée à une autre station que la première station de rattachement, il est établi un canal de groupe pour l'échange d'informations entre les stations satellites du groupe directement sans l'intervention de la station centrale.

Ainsi, grâce à l'invention il n'est plus nécessaire d'impliquer une pluralité de stations centrales auxquelles sont rattachées des stations satellites proches les unes des autres, mais appartenant à des zones de couvertures différentes.

La description suivante, accompagnée des dessins ci-annexés, le tout donné à titre d'exemple non limitatif, fera bien comprendre comment l'invention peut être réalisée.
La figure 1 montre un système conforme à l'invention.
La figure 2 montre l'organisation d'un multiplex temporel.
La figure 3 montre le schéma d'une station.
La figure 4 explique le processus de l'appel de groupe dans le cas où une seule station centrale est impliquée.
La figure 5 explique le processus de l'appel de groupe dans le cas où deux stations centrales sont impliquées.

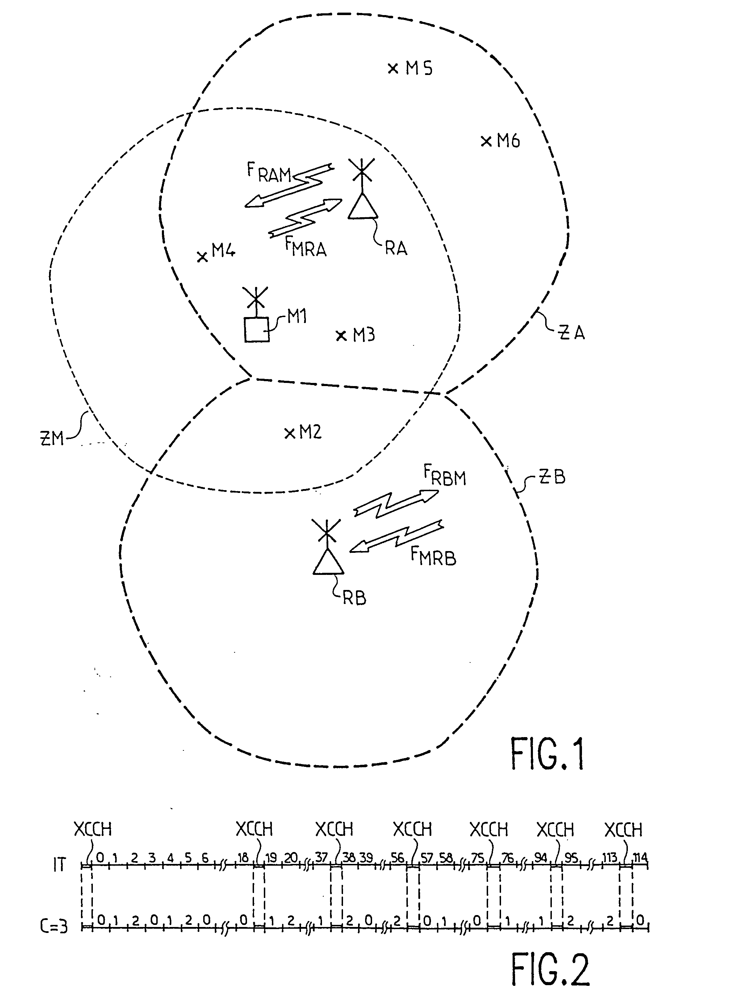

Le système montré à la figure 1 est formé de deux stations centrales RA et RB. La zone ZA, en gros pointillé, est la zone de couverture de la station RA et la zone ZB indiquée de la même manière est celle de la station RB. Ces deux zones sont montrées contiguës pour des raisons de clarté d'explication, alors qu'en pratique ces zones se chevauchent en partie. M1, M2, ..., M5, M6 représentent l'emplacement de différentes stations satellites qui se trouvent, par exemple, à bord d'automobiles.

Les stations communiquent entre elles par des liaisons radioélectriques qui utilisent à l'intérieur de chaque zone deux canaux fréquentiels F_{MRA} et F_{RAM} pour la zone ZA et les canaux F_{MRB} et F_{RBM} pour la zone ZB. Les canaux F_{MRA} et F_{MRB} sont empruntés pour les communications allant des stations satellites vers les stations centrales RA et RB respectivement, (voie montante), tandis que les canaux F_{RAM} et F_{RBM} le sont pour les communications allant des stations centrales RA et RB respectivement vers les stations satellites (voie descendante).

Les communications établies sur ces canaux fréquentiels sont organisées selon un multiplex temporel du type TDMA.

La figure 2 montre d'une manière très schématique l'organisation de ce multiplex. Cette organisation dérive de celle qui a été décrite dans la demande de brevet FR-90 12 416 déposée le 9 octobre 1990 au nom de la demanderesse. Pour des raisons de simplification on a représenté un multiplex comportant 3 canaux temporels formés d'intervalles de temps numérotés de 0 à 2 ; parmi ces intervalles sont insérés des intervalles de temps XCCH réservés à la gestion du système. Ces intervalles sont placés alors entre les intervalles de temps IT 18 et 19, 37 et 38, 56 et 57, etc... tandis que : le canal temporel 0 correspond aux intervalles IT 0, 3, 6, ..., 18,
le canal 1 aux intervalles 1, 4, 7, ..., 19,
et le canal 2 aux intervalles 2, 5, 8, ..., 20.

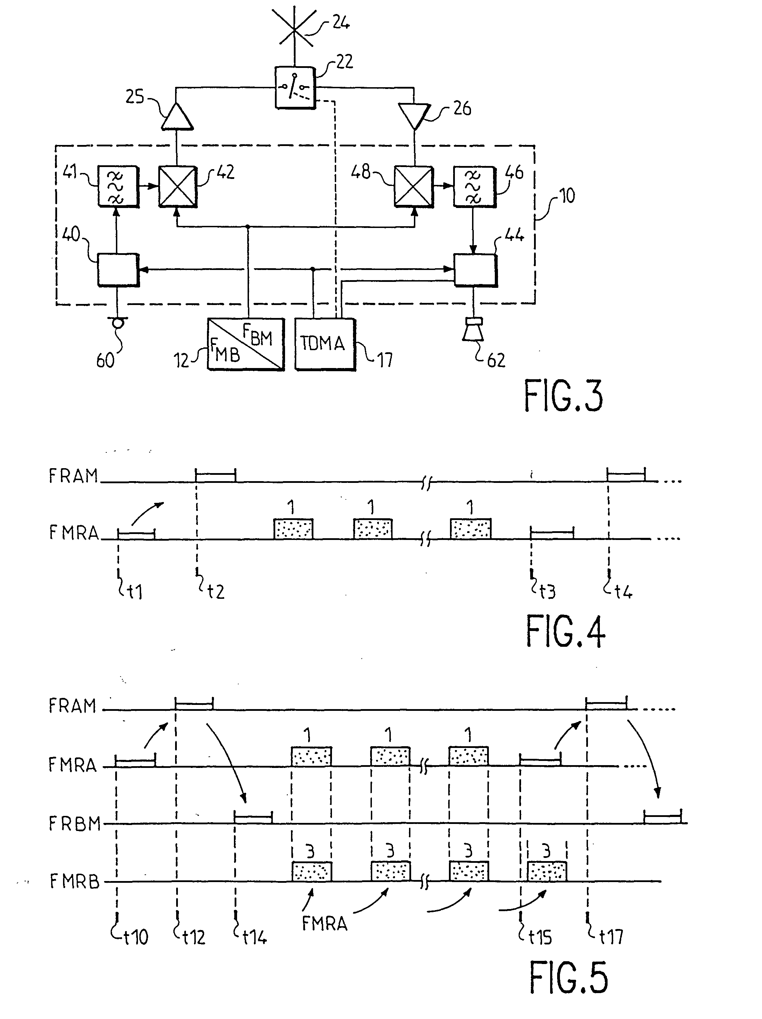

La figure 3 montre le schéma des stations mobiles M1, M2, ..., de structure identique.

Chaque station est composée d'un ensemble d'émission-réception 10 piloté par un couple d'oscillateurs de référence 12 oscillant respectivement aux fréquences F_{MB} et F_{BM}, ces fréquences pouvant prendre les valeurs pour s'adapter aux différents canaux fréquentiels, F_{MRA}, F_{MRB}, F_{RAM}, F_{RBM}, ..., etc. Cet ensemble s'adapte à une trame TDMA au moyen d'un gestionnaire de trames 17. Un commutateur de duplexage 22 commandé par le gestionnaire 17 permet, sur une même antenne 24, à la fois d'émettre sur une fréquence F_{MB} et de recevoir sur une fréquence F_{BM}, différente ou non de F_{MB}. A ce commutateur 22 sont connectés un amplificateur d'émission 25 et de réception 26.

L'ensemble 10 est formé d'une partie émission 40 coopérant avec un filtre 41, centré sur une fréquence intermédiaire FI, et un modulateur 42. Le modulateur 42 centre sur la fréquence porteuse F_{MB} les informations fournies par la partie 40. La partie 40 arrange les informations à transmettre selon les commandes établies par le gestionnaire 17, module les informations en phase, fréquence ou amplitude sur une fréquence intermédiaire FI. Ce gestionnaire 17 permet aussi de récupérer les différentes informations contenues dans la trame TDMA reçue par un ensemble de réception 44. L'entrée de cet ensemble est reliée à la sortie d'un filtre 46, centré sur la fréquence FI, connecté à la sortie d'un démodulateur 48. Ce démodulateur 48 reçoit les signaux de l'amplificateur 26 et ceux fournis à la fréquence F_{BM} ou F_{MB}. La référence 60 indique le microphone de l'abonné et la référence 62 son écouteur. L'information de parole est préalablement codée sous forme numérique, puis est transmise dans l'un des intervalles de temps de la trame transmise par la porteuse F_{MRB} ou F_{MRA}, cet intervalle étant affecté par le gestionnaire 17. De même, les informations de parole provenant d'un abonné lointain, transmises dans l'un des intervalles de temps de la trame transmise par F_{RAM} ou F_{RBM} sont restituées à l'écouteur, après décodage. En outre le gestionnaire 17 agit pour que tous les XCCH puissent être reçus. Ce qui permet une bonne gestion du système.

Conformément à un aspect de l'invention, pour établir un appel de groupe, la voie montante est utilisée pour échanger des informations entre stations mobiles. Par l'invention, l'échange d'informations peut être fait directement entre les stations mobiles.

La figure 4 explicite le fonctionnement du système conforme à l'invention (processus d'appel de groupe où une seule station centrale est impliquée).

A l'instant t1, l'abonné de la station satellite M1 demande un appel de groupe local en utilisant un ou plusieurs intervalles de temps XCCH. Cette demande examinée au niveau de la station centrale RA permet d'allouer un ou plusieurs intervalles de temps de la trame véhiculée par les porteuses F_{MRA} et F_{RAM} de groupe. Ceci est transmis aux mobiles concernés dans la voie descendante au moyen d'un ou plusieurs intervalles de temps XCCH (t2). Dès qu'un canal temporel est alloué, toutes les stations mobiles se partagent ou écoutent ce canal (en mode simplex ou semi-duplex) après confirmation de la participation des mobiles impliqués dans l'appel de groupe local (par exemple, les mobiles M5 et M6 n'étant pas dans la couverture ZM de M1 ne resteront pas sur ce canal de groupe local). Puis à l'instant t3 l'abonné demandeur arrête sa demande d'appel de groupe ; ceci est signalé à la station centrale dans un intervalle XCCH qui, en retour, libère le canal temporel de la voie montante affectée à cet appel de groupe au temps t4.

La figure 5 explique le fonctionnement du système conforme à l'invention lorsqu'un mobile M2 est situé dans une zone de couverture ZB différente de la zone de couverture ZA à laquelle appartient l'abonné demandeur de la station M1. L'abonné de la station M2 est situé cependant dans la zone de couverture ZM de la station M1. Selon les techniques connues, les différentes voies TDMA peuvent être synchronisées, de sorte qu'après la demande de groupe effectuée à l'instant t10 par l'abonné de la station M1, la station RA détermine avec la station RB un intervalle de temps qui peut être commun avec les deux voies montantes F_{MRA} et F_{MRB} et dans lequel le mobile M2 peut se connecter en changeant de canal fréquentiel (en simplex ou semi-duplex) ; par exemple, cela peut être le canal 1 pour la voie F_{MRA} et 3 pour la voie F_{MRB}. A l'instant t12 la station RA envoie aux mobiles de sa couverture le canal affecté à cet appel de groupe et à l'instant t14 (qui peut être identique à t12), c'est la station RB. A un instant t15 la demande de fin d'appel de groupe est demandée et aux instants t16 et t17 (qui peuvent être identiques) les stations RA et RB libèrent les canaux temporels.

Ainsi, selon ce dernier processus, la station M2 qui est proche et dans la couverture de M1, peut faire partie des interlocuteurs de l'appel de groupe, tandis que les stations M5 et M6 qui ne sont pas dans la couverture ZM de M1, ne peuvent participer à cet appel de groupe local.

Une variante de l'invention consiste à utiliser un canal de groupe ne faisant pas pour cela partie des ressources du système ; par exemple, le plus facile est d'utiliser un canal fréquentiel FFR. La procédure est alors identique à celle expliquée à l'aide de la figure 5 où FMRB est à remplacer par le canal FFR qui peut alors être utilisé de façon continue et non en TDMA.

De même, il peut être utilisé un canal d'appel intermédiaire (temporel ou fréquentiel) pour faciliter la mise en communication de groupe. Ceci est par exemple nécessaire lorsque l'on veut comprendre, dans l'appel de groupe, des mobiles hors réseau (par exemple M7, qui n'est ni dans ZA, ni dans ZB).

Enfin, il est à noter que le procédé ci-dessus peut aussi être utilisé pour des appels individuels ; le but en est alors, en plus de l'efficacité spectrale déjà décrite, de pouvoir améliorer la qualité de la communication dans certains cas de figure (par exemple dans la figure 1, la liaison M1-M3 par l'intermédiaire de la station centrale RA est certainement de moins bonne qualité que la liaison directe M1-M3, ces deux stations étant à proximité l'une de l'autre). On utilise pour cela les mêmes principes, la liaison directe étant validée, s'il y a lieu, au moyen du canal intermédiaire décrit précédemment, en utilisant les intervalles XCCH.

## Revendications

1. Système de transmission radioélectrique comportant au moins : une pluralité de stations satellites (M1 à M6), une station centrale (RA, RB) à laquelle une zone de couverture est rattachée, et qui constitue une station centrale de rattachement pour chaque station satellite située dans sa zone de couverture, chaque station centrale émettant des informations vers une station satellite située dans sa zone de couverture par un intervalle de temps alloué d'un multiplex temporel formé sur une voie de transmission descendante, chaque station satellite comportant des premières ressources de transmission qui sont formées par une voie de transmission montante pour un mutiplex temporel, pour permettre l'émission d'informations à destination de sa station centrale de rattachement, au moyen d'un intervalle de temps alloué dudit multiplex temporel, système offrant le service d'appel de groupe pour établir un appel de groupe pour un groupe d'au moins une station satellite, demandé à partir d'une station satellite vers sa station centrale de rattachement dite première station de rattachement, à l'aide de ladite première ressource, **caractérisé en ce que** lorsque ledit groupe est constitué par au moins une station satellite dite station satellite hors couverture, rattachée à une autre station que la première station de rattachement, il est établi un canal de groupe pour l'échange d'informations entre les stations satellites du groupe directement sans l'intervention de la station centrale.

2. Système de transmission radioélectrique selon la revendication 1, **caractérisé en ce que** le canal de groupe est formé à partir d'intervalles de temps des premières ressources, lesdites stations hors couverture se commutant sur ledit canal de groupe.

3. Système de transmission radioélectrique selon la revendication 2 pour lequel les stations satellites sont munies de secondes ressources de transmission indépendantes des premières, **caractérisé en ce que** le canal de groupe est formé sur la base de ces secondes ressources.

4. Système de transmission radioélectrique selon la revendication 3, **caractérisé en ce que** ces secondes ressources sont constituées par un canal fréquentiel indépendant des voies montantes et des voies descendantes des secondes ressources.

5. Système de transmission radioélectrique selon l'une des revendications 1 à 4, **caractérisé en ce que** le canal de groupe est formé à partir des intervalle de temps du multiplex de la voie montante.

6. Système selon l'une des revendications 1 à 5 **caractérisé en ce que** les multiplex temporels de la voie montante utilisés par toutes les stations centrales et satellites sont synchronisés.

7. Système selon l'une des revendications 1 à 6 **caractérisé en ce que** les multiplex temporels de la voie descendante utilisés par toutes les stations centrales et satellites sont synchronisés.

8. Station satellite destinée à être raccordée à un système selon l'une des revendications précédentes, rattachée à une zone de couverture d'une station centrale émettant des informations selon une voie descendante et recevant des informations selon une voie montante, station satellite munie de premières ressources pour communiquer avec ladite station centrale et des moyens pour communiquer avec au moins une autre station, munie de moyens d'appel pour signaler un appel de groupe par la voie montante et de moyens pour recevoir un appel de groupe par l'intermédiaire de la voie descendante, **caractérisée en ce que** pour traiter les appels de groupe, elle comporte des moyens pour se commuter sur un canal de groupe établi sur la base desdites premières ressources lorsqu'elle appartient à la zone de couverture de la station centrale et pour se commuter sur le canal de groupe lorsqu'elle est rattachée à une autre station centrale que celle dont émane l'appel de groupe.

9. Station satellite selon la revendication 8, caratérisée en ce qu'elle comporte des deuxièmes ressources indépendantes des premières.

## Patentansprüche

1. Funkübertragungssystem mit mindestens: Einer Vielzahl von Nebenstationen (M1 bis M6), einer Zentralstation (RA, RB), der eine Abdeckungszone angegliedert ist und die eine angegliederte Zentralstation für jede in ihrer Abdeckungszone liegenden Nebenstation bildet, wobei jede Zentralstation Informationen zu einer in ihrer Abdeckungszone liegenden Nebenstation in einem von einem Zeitmultiplex zugeteilten Zeitintervall sendet, auf einem absteigenden Übertragungsweg gebildet, jede Nebenstation erste Übertragungsressourcen aufweist, für ein Zeitmultiplex von einem aufsteigenden Übertragungsweg gebildet, um insbesondere die Übertragung von Informationen in Richtung ihrer angegliederten Zentralstation mittels einem dem besagten Zeitmultiplex zugeteilten Zeitintervall zu ermöglichen, und das System den Gruppenanrufservice für den Aufbau eines Gruppenanrufs für eine Gruppe von mindestens einer Nebenstation bietet, angefordert ausgehend von einer Nebenstation zu ihrer Zentralstation in der angegliederten Abdeckungszone mit der Bezeichnung erste angegliederte Station mithilfe der besagten ersten Ressource, **dadurch gekennzeichnet, dass** wenn die besagte Gruppe aus mindestens einer Nebenstation mit der Bezeichnung Nebenstation ohne Abdeckungszone gebildet wird, an eine andere Station angegliedert als die erste angegliederte Station, ein Gruppenkanal für den Informationsaustausch zwischen den Nebenstationen der Gruppe direkt und ohne den Eingriff der Zentralstation aufgebaut wird.

2. Funkübertragungssystem nach Anspruch 1, **dadurch gekennzeichnet, dass** der Gruppenkanal ausgehend von Zeitintervallen der ersten Ressourcen gebildet wird, wobei sich die besagten Stationen außerhalb des Abdeckungsbereichs auf den besagten Gruppenkanal schalten.

3. Funkübertragungssystem nach Anspruch 2, in dem die Nebenstationen mit zweiten von den ersten unabhängigen Übertragungsressourcen versehen sind, **dadurch gekennzeichnet, dass** der Gruppenkanal auf der Basis dieser zweiten Ressourcen gebildet wird.

4. Funkübertragungssystem nach Anspruch 3, **dadurch gekennzeichnet, dass** diese zweiten Ressourcen von einem unabhängigen Frequenzkanal der aufsteigenden Wege und der absteigenden Wege der zweiten Ressourcen gebildet werden.

5. Funkübertragungssystem nach einem der Ansprüche 1 bis 4, **dadurch gekennzeichnet, dass** der Gruppenkanal ausgehend von den Zeitintervallen des Multiplex des aufsteigenden Wegs gebildet wird.

6. System nach einem der Ansprüche 1 bis 5, **dadurch gekennzeichnet, dass** die von allen Zentral- und Nebenstationen verwendeten Zeitmultiplexe des aufsteigenden Wegs synchronisiert sind.

7. System nach einem der Ansprüche 1 bis 6, **dadurch gekennzeichnet, dass** die von allen Zentral- und Nebenstationen verwendeten Zeitmultiplexe des absteigenden Wegs synchronisiert sind.

8. Nebenstation für den Anschluss an ein System nach einem der vorhergehenden Ansprüche, an eine Abdeckungszone einer Zentralstation angegliedert, die Informationen entlang einem absteigenden Weg sendet und Informationen entlang einem aufsteigenden Weg empfängt, wobei die Nebenstation mit ersten Ressourcen für die Kommunikation mit der besagten Zentralstation und mit Mitteln für die Kommunikation mit mindestens einer anderen Station ausgestattet ist, mit Anrufmitteln ausgestattet, um einen Gruppenanruf über den aufsteigenden Weg zu melden, und mit Mitteln für den Erhalt eines Gruppenanruf über den absteigenden Weg, **dadurch gekennzeichnet, dass** sie für die Verarbeitung der Gruppenanrufe Mittel enthält, um sich auf einen Gruppenkanal zu schalten, aufgebaut auf der Basis der besagten ersten Ressourcen, wenn sie zur Abdeckungszone der Zentralstation gehört und um sich auf den Gruppenkanal zu schalten, wenn sie an eine andere Zentralstation als diejenige angegliedert ist, von der der Gruppenanruf ausgeht.

9. Nebenstation nach Anspruch 8, **dadurch gekennzeichnet, dass** sie zweite, von den ersten unabhängige Ressourcen enthält.

## Claims

1. A radio transmission system comprising at least: a plurality of satellite stations (M1 to M6), a central station (RA, RB) with which a coverage zone is associated and which constitutes a central linking station for each satellite station present in its coverage zone, each central station sending information to a satellite station present in its coverage zone in a time interval allocated within a time division multiplex formed in a down transmission channel, each satellite station comprising first transmission means which are formed by an up transmission channel for a time division multiplex for enabling the transmission of information to its connected central station by means of a time interval allocated from said time division multiplex, which system offers a group call service for establishing a group call for a group comprising at least one satellite station requested by a satellite station from its central linking station denoted first linking station with the use of said first means, **characterized in that**, when said group is formed by at least one satellite station, and said satellite station is outside the coverage but within linking distance to a station other than the first linking station, a group call channel is established directly for the exchange of information between the satellite stations of the group without the intervention of the central station.

2. A radio transmission system as claimed in claim 1, **characterized in that** the group call channel is formed on the basis of time intervals of the first means, wherein said stations outside the coverage communicate over said group call channel.

3. A radio transmission system as claimed in claim 2, wherein the satellite stations are provided with second transmission means separate from the first, **characterized in that** the group call channel is formed on the basis of said second means.

4. A radio transmission system as claimed in claim 3, **characterized in that** said second means are formed by a frequency channel that is independent of the up channels and down channels of the second means.

5. A radio transmission system as claimed in any one of the claims 1 to 4, **characterized in that** the group call channel is formed on the basis of time intervals of the multiplex of the up channel.

6. A radio transmission system as claimed in any one of the claims 1 to 5, **characterized in that** the time division multiplexes of the up channel used by all central stations and satellites are synchronized.

7. A system as claimed in any one of the claims 1 to 6, **characterized in that** the time division multiplexes of the down channel used by all central stations and satellites are synchronized.

8. A satellite station designed to be connected to a system as claimed in any one of the preceding claims, linked to a coverage zone of a central station that transmits information over a down channel and that receives information over an up channel, which satellite station is provided with first means for communicating with said central station and with means for communicating with at least one other station, provided with call means for signaling a group call via the up channel and with means for receiving a group call via the down channel, **characterized in that**, for handling group calls, it comprises means for switching to a group call channel established on the basis of said first means when it forms part of the coverage zone of the central station and for switching to the group call channel when it is linked to a central station other than the one from which the group call is issued.

9. A satellite station as claimed in claim 8, **characterized in that** it comprises second means independent of the first ones.
